# EUROPEAN PATENT APPLICATION

(11) **EP 1 164 383 A2**
(43) Date of publication of application: **19.12.2001**
(21) Application number: 01112096.1
(22) Date of filing: 29.05.2001
(51) Int. Cl.: G01S 5/14

(54) **Wireless position measurement terminal and wireless position measurement system**

(30) Priority: 13.06.2000 JP 2000182317
(71) Applicant: Hitachi, Ltd., Chiyoda-ku, Tokyo 101-8010 (JP)
(72) Inventor: Kuwahara, Mikio, Hitachi, Ltd., Intell. Prop. Grp., Chiyoda-ku, Tokyo 100-8220 (JP); Yano, Takashi, Hitachi, Ltd., Intell. Prop. Grp., Chiyoda-ku, Tokyo 100-8220 (JP); Ishifuji, Tomoaki, Hitachi, Ltd., Intell.Prop.Grp., Chiyoda-ku, Tokyo 100-8220 (JP); Doi, Nobukazu, Hitachi, Ltd., Intell.Prop.Grp., Chiyoda-ku, Tokyo 100-8220 (JP)
(74) Representative: Beetz & Partner Patentanwälte

(57) **Abstract**

A wireless position measurement terminal, a wireless position measurement system, and a method for performing delay profile calculation window sizing in a wireless position measurement system, are disclosed. The terminal (1) includes a delay profile calculating circuit (21), and a window setter (22) connected to the delay profile calculating circuit that varies a range for a delay profile calculating window according to at least one information item within a remote received signal. The terminal may additionally include a memory circuit (13) that stores positional information, wherein the window setter (22) changes the range according to a correlation of the positional information and the information item. The system includes the terminal (1), and at least three base stations (2, 3, 4), wherein at least one of the base stations provides the remote received signal to the terminal. The method includes the steps of receiving the remote signal, including the information item, sizing of a delay profile calculation window according to the information item, estimating of propagation distances between the terminal and each base station by a calculating of a delay profile of each base station, and triangulating of the then-present location of the terminal based on propagation distances.

## Description

### BACKGROUND OF THE INVENTION

### Field of the Invention

The present invention relates to measurement of a position by wireless communication, and more particularly to a wireless position measurement terminal, and a wireless position measurement system for terminals and base stations.

### Description of the Background

In a typical wireless system, such as a CDMA system, base stations are used as the basis of transmission and reception. The delay quantity, i.e. a delay profile, for communication between a mobile terminal and the base station varies with the distance between the terminal and the base station or stations and the path taken by signals between the terminal and the base stations. For example, a signal arriving from a distant base station is received at the terminal after a longer time period following transmission from that distant base station than is a signal coming from a nearby base station, and thus will have a shifted delay profile when compared to the nearby base station, and a signal following a direct path from the base to the terminal will have a different delay profile than will a signal that is reflected to reach the terminal from the base station.

Further, in order to locate the position of a terminal, the distances, i.e. the delay profiles, from at least three base stations must be measured, in order to perform a location via triangulation methods. Thus a sufficient size of a delay profile sampling window should be secured to allow for the observation of propagation data between at least three base stations and the terminal, as discussed further hereinbelow.

Techniques for measuring the position of a terminal using wide band wireless signals, such as a location system using code division multiple access (CDMA) signals, are disclosed in Japanese Published Unexamined Patent Application No. Hei 7-181242. Fig. 3 is an illustration of a delay profile system disclosed in Japanese Published Unexamined Patent Application No. Hei 7-181242. Fig. 3 illustrates a terminal 1 that receives signals 6, 7, 8, such as wideband signals 6,7,8, from a plurality of base stations 2, 3, 4, wherein the base stations 2,3,4 are synchronized with, for example, the Global Positioning System (GPS) 5 or the like.

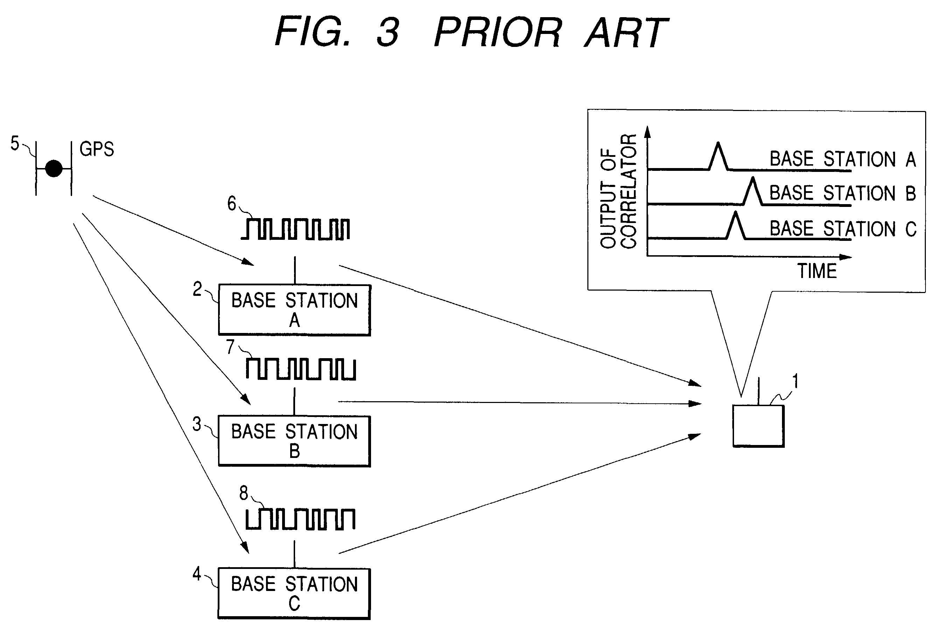

Delay profiles, such as those in Fig. 3, allow for an estimating of the propagation distance to a terminal of each wideband signal 6,7,8 from the base stations 2,3,4 respectively, as discussed hereinabove, and the position of the terminal may then be estimated using the base station locations and the estimated distance of the terminal therefrom via triangulation methods.

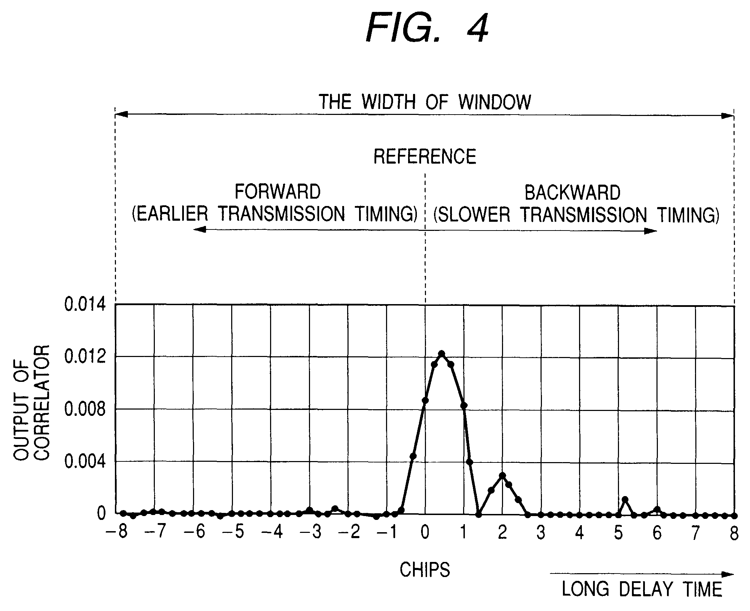

Fig. 4 is a timing diagram illustrating an exemplary delay profile. A delay profile, as used herein, is a presentation of a calculated correlation between a transmitted signal and the pertinent received signal. The delay profile will vary according to the directness of the path a signal takes between a base and a terminal, as is known in the art, and as is discussed hereinabove. Although delay profiles herein are presented as pure time, it will be apparent to those skilled in the art that delay profiles may be presented, for example, as a propagation time basis using an integration of the delay time with the velocity of light, because the delay results from the propagation of a wave.

With respect to Fig. 4, due to the receipt of the received signal at a correlation peak, the received signal may be used to estimate the propagation time between the base and the terminal, i.e. the received signal displays the characteristics of the path and time taken by that signal to reach the terminal. As shown in Fig. 4, and as mentioned hereinabove, numerous delay profiles, such as delay profiles of numerous base stations, may be calculated by a terminal with respect to a calculation "window", wherein the window includes a series of samples around a specific reference time. For a given base station within a window, the results of a correlation calculation within the window at a time prior to a high correlation are herein defined as "forward", and the results of a correlation calculation within the window at a time following a high correlation are herein defined "backward". It will be apparent to those skilled in the art that the larger the window selected, the greater the quantity of calculations needed to calculate delay profiles within the window.

Where a terminal is in a location where the density of base stations is unknown, the window must be sufficiently expanded forward and backward to enable the measurement of at least three distances even if the base stations are sparsely distributed, because at least three base station distances are required to perform a triangulation location. However, in a location where the density of base stations is unknown, the use of a large window might prove unnecessary and redundant, and this use of an unnecessarily large window might additionally require extensive unnecessary calculations, an increase in response time, and/or an increase in power consumption.

Therefore, the need exists for a terminal, a system in which to operate the terminal, and a method of using the terminal that provides for the calculation of distance of the terminal from a plurality of base stations, thereby allowing a calculation of the location of the terminal, but that minimizes the quantity of calculations necessary to obtain this distance and location.

### SUMMARY OF THE INVENTION

The present invention is directed to a wireless position measurement terminal that permits changes in the size of the window for delay profiles according to any then-present location of the terminal. The wireless position measurement terminal includes a delay profile calculating circuit that calculates delay profiles for at least one remote received signal, and a window setter communicatively connected to the delay profile calculating circuit, wherein the window setter sets a range for a delay profile calculating window for the delay profile calculating circuit. The window setter changes the range according to at least one information item, and the at least one information item is within at least one of the at least one remote received signals. The at least one information item may, for example, be received from one primary base station, and may include the range needed for calculation of the delay profiles of at least two base stations other than the one primary base station.

The wireless position measurement terminal may additionally include a memory circuit that stores positional information of a first plurality of base stations, wherein at least one base station of the first plurality of base stations sends the information item to the terminal in one of the at least one remote received signals. The window setter then changes the range according to a correlation of the positional information and the information item.

In one embodiment of the wireless position measurement terminal, the range is changed by selecting three base stations, including the base station having maximum power received, and selecting by the window setter of a range equivalent to an average distance of the positional information between the three selected base stations added to a predetermined margin. Alternatively, the positional information may include one range each for rural, urban and highly congested areas.

The present invention is also directed to a wireless position measurement system that performs delay profile calculation window sizing for a terminal, wherein the window sizing is correspondent to a population density of base stations in a then-present location of the terminal. The system of the present invention includes the terminal, and at least three base stations, wherein at least one of the at least three base stations provides at least one signal to the terminal. At least one of the at least one signals includes at least one information item. The terminal receives the at least one signal transmitted from at least one of the at least three base stations, and estimates the propagation distances between the terminal and each of the at least three base stations by calculating the delay profile of each base station. The delay profiles of all of the at least three base stations are calculated in a window sized by the terminal according to the at least one information item. The terminal then triangulates the then-present location of the terminal based on the three propagation distances.

The system of the present invention may additionally include a center, such as a server. The at least one information item may then be stored in the center, and the terminal preferably then receives the at least one information item over a wireless connection with the center via at least one of the at least one signals.

The present invention is also directed to a method for performing delay profile calculation window sizing for a terminal in a wireless position measurement system, wherein the window sizing is correspondent to a population density of base stations in a then-present location of the terminal. The method includes the step of receiving at least one signal at the terminal from at least one of at least three base stations, wherein at least one of the at least one signals includes at least one information item, the step of sizing of a delay profile calculation window according to the at least one information item, the step of estimating of propagation distances between the terminal and each of the at least three base stations by a calculating of a delay profile of each base station, wherein the delay profiles of all of the at least three base stations are calculated in the window sized by the terminal according to the at least one information item, and the step of triangulating of the then-present location of the terminal based on the three propagation distances. The method may additionally include the steps of storing the at least one information item in a center, and receiving the at least one information item over a wireless connection with the center via at least one of the at least one signals.

Because the wireless position measurement terminal according to the present invention sets the size of the window for calculating delay profiles according to the spacing between the base stations in any then-present location, the window size in the instance wherein base stations are densely spaced can be reduced, and many base stations can thereby be observed at high speed and using minimal processing resources. Further, in the instance wherein base stations are sparsely distributed, position measurement can be dependably accomplished by calculating delay profiles for a small number of base stations for a longer period using the minimum size window necessary to perform the position measurement, thereby using minimal processing resources and providing maximum speed.

Other features and advantages of the present invention will be apparent from the following detailed description taken in conjunction with the accompanying drawings.

### BRIEF DESCRIPTION OF THE DRAWINGS

For the present invention to be clearly understood and readily practiced, the present invention will be described in conjunction with the following figures, wherein like reference characters designate the same or similar elements, which figures are incorporated into and constitute a part of the specification, wherein:
Fig. 1 illustrates a wireless position measurement system;
Fig. 2 illustrates a wireless position measurement terminal;
Fig. 3 illustrates a wireless position measurement system according to the prior art;
Fig. 4 illustrates a delay profile;
Fig. 5 illustrates the calculation of a delay profile in an embodiment wherein base stations are densely spaced;
Fig. 6 illustrates the calculation of a delay profile in an embodiment wherein base stations are sparsely spaced; and
Fig. 7 illustrates a wireless position measurement terminal.

### DETAILED DESCRIPTION OF THE INVENTION

It is to be understood that the figures and descriptions of the present invention have been simplified to illustrate elements that are relevant for a clear understanding of the present invention, while eliminating, for purposes of clarity, many other elements found in a typical telecommunications system. Those of ordinary skill in the art will recognize that other elements are desirable and/or required in order to implement the present invention. However, because such elements are well known in the art, and because they do not facilitate a better understanding of the present invention, a discussion of such elements is not provided herein.

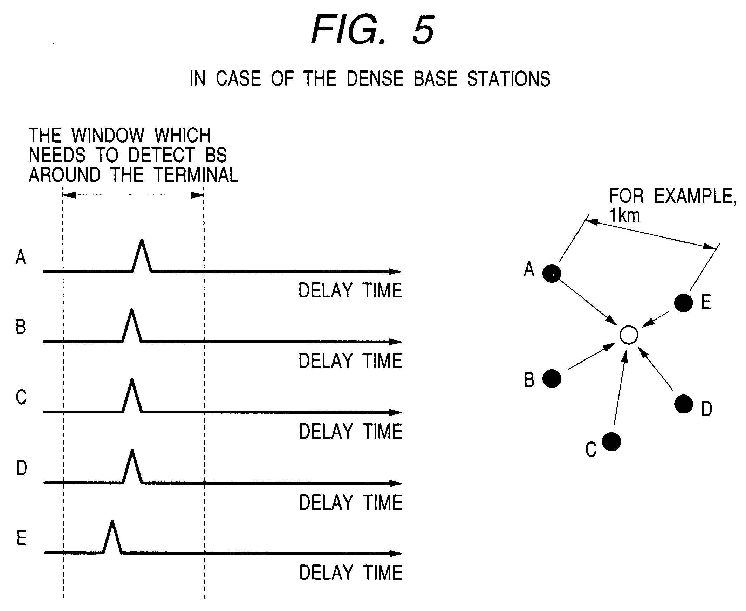

Fig. 5 is a timing diagram illustrating the observation through a window of propagation data for a plurality of densely spaced base stations. In the case illustrated in Fig. 5, the propagation distance of a wave from each base station to the terminal is short, and distances from different base stations to the terminal vary little. As a result, the high correlation portion of each of the delay profiles calculated on the left side of Fig. 5 is received at the terminal at substantially the same time. Therefore, the size of the window needed for profile calculation for the reference timing, i.e. for reception of the high correlation portion for at least three base stations, can be relatively small.

Referring to Fig. 5, where the spacing between base stations is approximately 1 km, it is preferable that, in order to estimate signal arrival times, correspondent to high correlation points, for at least three base stations, observation through a window corresponding to 3 to 6 km, i.e. at least two and preferably three to six times the spacing from one selected base station to the next base station, is performed. Additionally, where the propagation distance is estimated using a signal of, for example, 1 MHz in chip rate, and the velocity of light is known to be about 300,000 km/sec, observation through a window corresponding to 6 km/300,000 km/sec × 1,000,000 Hz = 20 chips ensures that the propagation signals are received from at least the five base stations of Fig.5.

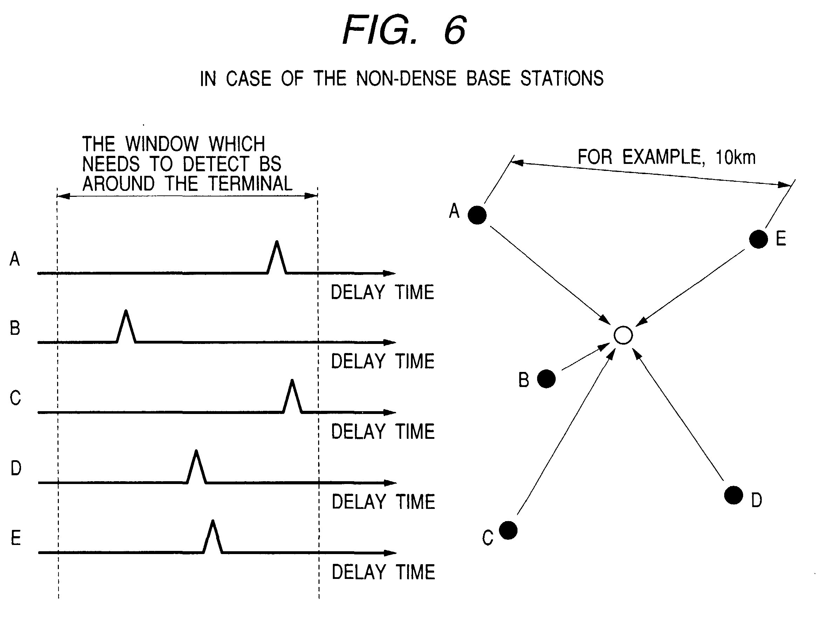

Fig. 6 is a timing diagram illustrating the observation of propagation data for a plurality of sparsely spaced base stations. In the embodiment of Fig. 6, if, for example, the distance from one base station to the next is approximately 10 km, the window necessary to allow for the observation of at least three base stations might correspond to 40 to 60 km in terms of propagation distance, according to the criteria discussed hereinabove, thus requiring a correlation calculation of as many as 200 chips, according to the calculation hereinabove.

When a terminal is located where the density of base stations is unknown, the window is preferably sufficiently expanded to enable the measurement of at least three distances (the delay profiles of at least three base stations) even if the base stations are sparsely distributed. However, in a location where the density of base stations is unknown, the use of a large window might prove unnecessary and redundant, and because this use of a large window might require extensive unnecessary calculations, an increase in response time, and/or an increase in power consumption, it is desirable to use a window properly correspondent to the density of base stations in any then-present location of the terminal.

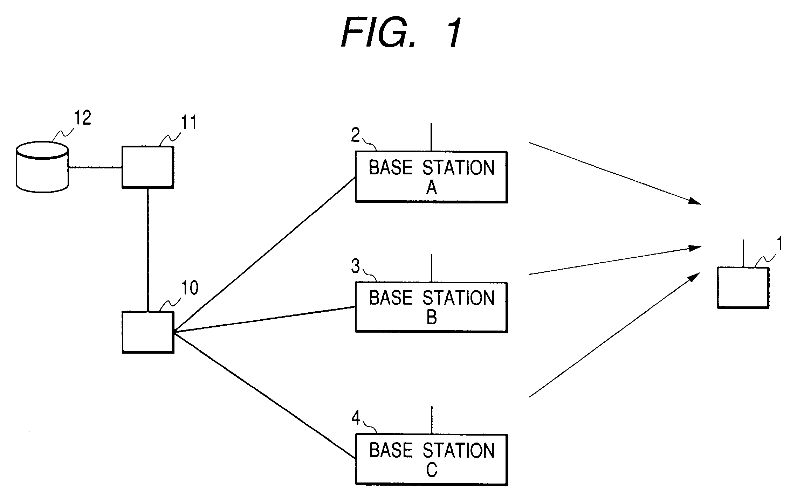

Fig. 1 is a block diagram illustrating a wireless position measurement system that performs window sizing correspondent to the density of base stations in a then-present location. The system includes a terminal 1, and at least three base stations 2,3,4. The position measurement terminal 1 receives signals transmitted from base stations A 2, B 3 and C 4. The terminal estimates propagation distances by measuring the delay profile of each base station 2,3,4, and estimates its own position from the positions of the base stations and the results of the estimation of the propagation distance that have been obtained. Because signals arriving from the base stations are delayed according to the respective propagation distances of each base station 2,3,4 from the terminal 1, the window size used to detect at least three delay profiles must be sufficiently enlarged to allow for the delay profile of the most distant of the at least three base stations to be calculated within the window.

In a first preferred embodiment, at least one of base stations A, B and C, preferably using a common control channel, such as a synch channel, transmits the following information items to the terminal 1: (a) the position of the base station; (b) the transmission timing offset, such as, for example, the PN offset of the base station in an IS-95 embodiment of the present invention; and (c) the size of at least one window needed for calculating delay profiles of that base station and other base stations in the vicinity of that base station. Additional information items that may be received at a terminal from a base station, such as power delivered, will also be apparent to those skilled in the art, and are included within the term "information item" as defined herein.

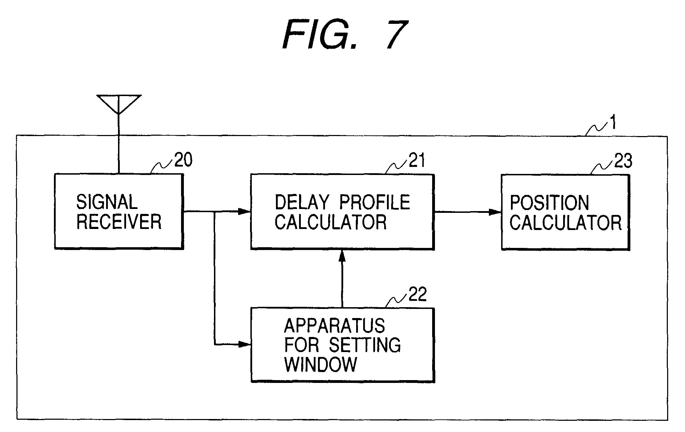

Fig. 7 is a block diagram illustrating a preferred embodiment of the position measurement terminal for carrying out the position measurement in the position measurement system of the present invention. The terminal includes a signal receiver 20 that converts received RF signals into base band signals, a delay profile calculator 21, a window setter 22, and a position calculator 23.

The window setter 22, preferably through a synchronization with the base station having the highest received power, for example, receives the control channel, such as the synch channel, transmitted from that base station, and acquires the information items (a), (b) and (c) discussed hereinabove. The window setter 22, on the basis of information item (c), determines the window through which to search for delay profiles.

The delay profile calculator 21 may include, for example, a correlator, or a matched filter. The delay profile calculator despreads a pilot signal in the search window to calculate a delay profile. A reference time for the calculation of a delay profile is determined from the transmission timing offset information item (b). Item (b) indicates the transmission time offset value for each individual base station of mobile communication from the system standard time. The terminal then estimates the standard time for the base station system, which is the time, such as GPS, universal standard time, or synchronized base station to base station time, to which all base stations are referenced. The terminal performs this estimation by adding the transmission timing offset of the base station to be observed to the standard time of the base station system, thereby generating the reference time of the base station to be observed. The window, consisting of forward and backward portions from the reference time of the base station to be observed, is set sufficiently forward and backward from the reference time to allow the calculation of at least two other base station delay profiles. As used herein, "forward" denotes searching for a base station at a closer location than the base station to be referenced, while "backward" denotes searching for a base station at a farther location than the reference.

In light of the fact that the window size required for calculating a delay profile is designated according to the base station in the embodiment of Fig. 1, the terminal performs no unnecessary processing to calculate the window size required for calculating the delay profiles of the base stations in the then-present area.

Returning now to Fig. 7, upon completion of the calculation of the delay profiles of the necessary at least three base stations, the terminal calculates the timing of the path from the base station, based on the peak position of the delay profile for that base station, and thereby calculates relative delay, i.e. propagation, times. The position calculator 23 then calculates the actual position of the terminal based on the relative delay information and information item (a), the base station position.

In a second preferred embodiment, at least one item of information (a), (b) and (c) is stored at a center 12, and the terminal receives the information via a wireless connection with the center 12. As illustrated in Fig. 1, the terminal 1 is connected via a wireless connection to at least one of a series of base stations A, B and C, and, according to the second preferred embodiment, the terminal may acquire base station information from a server 12 connected to the base station via a base station control apparatus 10 and a node 11 on a network, for example. The terminal can then calculate delay profiles through a selected window based on the information (a), (b), and (c) received from the center 12 according to the methodology discussed hereinabove with respect to Fig. 7.

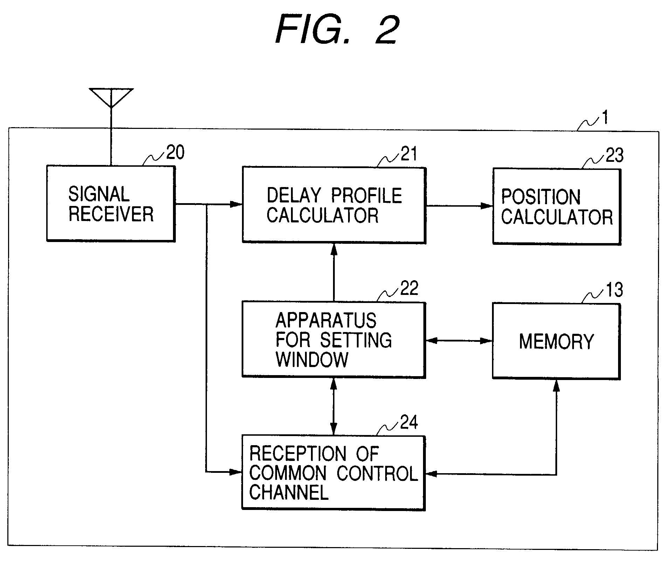

Fig. 2 is a block diagram illustrating a second preferred embodiment of the position measurement terminal. The terminal of Fig. 2 includes a signal receiver 20, a delay profile calculator 21, a window setter 22, a control channel receiver 24, a memory 13, and a position calculator 23. The signal receiver 20, the delay profile calculator 21, the window setter 22, and the position calculator 23 are substantially as discussed hereinabove with respect to Fig. 7.

Memory 13 is a memory device as is known in the art, such as a ROM or RAM device, and is within, or in communication with, terminal 1. In an embodiment wherein terminal 1 frequently performed position measurement, processing time can be limited where the aforementioned base station information item or items are included in the memory 13 at, or in communication with, the terminal. When base station information item (a) and/or (b) and/or (c) is included in a memory at or in communication with the terminal, communication with a base station is necessary on a less frequent basis. Once the use of memory 13 is initialized by the terminal 1, the terminal 1 can obtain information items (a) and/or (b) and/or (c) from at least one local base station, or by an inquiry to the center 12, and the terminal 1 can then accumulate the information (a) and/or (b) and/or (c) in the memory 13. In a subsequent instance wherein it becomes necessary for the terminal 1 to perform position measurement, the window setter 22 then selects a window based on information in the memory.

In operation of the window setter based on information in the memory, the terminal selects, for example, the base station having the highest received power, and, with reference to that base station, the terminal selects the base stations surrounding the maximum power base station to be observed within the window using the positional information on the location of a plurality of base stations held in the memory from prior use. Alternatively, the memory may be programmed with this positional information prior to use. For example, the memory may have stored therein a list of base stations, which base stations will include a list of base stations nearest in distance to a selected primary reference base station, such as a then-maximum power base station.

In a preferred embodiment, the terminal receives, or has stored in memory, the timing offset information of the primary reference base station, and estimates the standard time of the base station system therefrom. For example, the standard time may be the difference in the current time less the timing, such as the PN, offset. This exemplary embodiment therefore uses difference timing, although alternative base station timing methods will be apparent to those skilled in the art.

The window size may alternatively be empirically determined by the terminal according to the distances between the base stations. If, for example, the average distance between selected base stations in memory 13 is 4 km, the distance between the base station to be referenced and the terminal, though it is unknown, can, for example, be assumed to be not greater than the average distance between th reference base station and other selected base stations, due to the fact that it is known that the base station to be referenced is providing the maximum power signal, and thus is likely the nearest, or one of the nearest, base stations to the terminal. Therefore, a window equivalent to a 4 km propagation delay forward is selected. Since it is possible for the difference in distance to the terminal from one base station to be greater than the propagation distance between base stations, a base station spacing plus a predetermined margin is preferably selected as the backward part of the window. Several sample measurements, for example, would be sufficient to select this predetermined margin, and the manner of taking of these sample measurements will be apparent to those skilled in the art.

Using the empirical methodology discussed immediately hereinabove, the terminal generates a window suitable in size for calculating the necessary at least three delay profiles without having to obtain information from the base station(s). This elimination of the need to contact the base station(s) for information items results in faster processing by the terminal, because information concerning the base stations and/or the window need not be obtained from the base stations and/or the center each time position measurement is to be performed. It will additionally be apparent to those skilled in the art that, where the base station to be referenced remains the same as an earlier instance of position measurement, the same settings as those used in the earlier instance may be used without any additional or new calculations by the terminal concerning base stations or window size.

In an additional preferred embodiment of the operation of the system of the present invention, the correlation of the electric field intensity of signals arriving from each base station to the distance between the base station and the position of measurement itself allows the position of measurement to be approximately calculated. For example, the weighted center at a terminal position can be calculated by averaging the position vectors representing the positions of the base stations, weighted in proportion to the electric field intensity of the base station, thereby approximately indicating the terminal position. Using this weighting, the accuracy of estimating the distance of the terminal from each base station can be enhanced, thereby allowing for further reduction in the window size needed to calculate delay profiles.

Further, it will be apparent to those skilled in the art that position measurement may be performed by detecting the shortest forward path between a base station and the terminal, because the shortest forward path can be deemed to be a direct path. Therefore, once detection of the shortest forward path is completed, no further calculation of delay profile is necessary. Consequently, the calculation of delay profiles is begun in the forward portion of the window, and the calculation of the delay profile of a particular base station is completed when the first path is confirmed. In this manner, the processing used to calculate delay profiles can be further reduced.

The embodiments discussed hereinabove are exemplary embodiments in which the window size for calculating delay profiles is either designated by a base station, or designated by a center, or calculated by the terminal. However, the problem solved by each of these exemplary embodiments is that only a small window is needed for calculating delay profiles in the instance wherein base stations are densely spaced, while a larger window is needed in the instance wherein base stations are sparsely spaced. Therefore, methods other than those discussed hereinabove, such as, for example, the use of window sizes determined in advance for rural, urban and highly congested areas, and additional methods wherein the calculation of delay profiles varies with the geographic location of the terminal, are also contemplated within the scope of the present invention.

The use of the present invention reduces the quantity of processing needed for the calculation of delay profiles in wireless position measurements, and thereby reduces system response time and terminal power consumption. Other advantages and benefits of the present invention will be apparent to those skilled in the art.

The present invention is not limited in scope to the embodiments discussed hereinabove. Various changes and modifications will be apparent to those skilled in the art, and such changes and modifications fall within the spirit and scope of the present invention. Therefore, the present invention is to be accorded the broadest scope consistent with the detailed description, the skill in the art and the following claims.

## Claims

1. A wireless position measurement terminal (1) for calculating a location, comprising:
a delay profile calculating circuit (21) that calculates delay profiles for at least one remote received signal; and
a window setter (22) communicatively connected to said delay profile calculating circuit, wherein said window setter varies a range for a delay profile calculating window for said delay profile calculating circuit according to at least one information item, wherein the at least one information item is within at least one of the at least one remote received signals.

2. The wireless position measurement terminal of claim 1, further comprising:
a memory circuit (13) that stores positional information for a first plurality of base stations, wherein at least one base station (2, 3, 4) of said first plurality of base stations sends the information item to the terminal (1) in one of the at least one remote received signals, and wherein said window setter (22) changes the range according to a correlation of the positional information and the information item.

3. The wireless position measurement terminal of claim 2, wherein the at least one information item comprises the base station having maximum power received at the terminal, and wherein said window setter (22) varies the range according to the positional information of the base station having maximum power received.

4. The wireless position measurement terminal of claim 2, wherein the range is varied by selecting three base stations (2, 3, 4), including the base station having maximum power received, and selecting by said window setter (22) of a range equivalent to an average distance of the positional information between the three selected base stations added to a predetermined margin.

5. The wireless position measurement terminal of claim 3, wherein the positional information includes one range for each of a rural, an urban and a highly congested area, and wherein the information item comprises in which of the rural, the urban, or the congested areas the terminal is.

6. The wireless position measurement terminal of claim 1, wherein the at least one information item is received from one base station (2, 3, 4), and wherein the at least one information item comprises the range necessary for calculation of the delay profiles of at least two base stations other than the one base station.

7. The wireless position measurement terminal of claim 6, wherein the one base station comprises the base station having maximum received power at the terminal.

8. The wireless position measurement terminal of claim 1, wherein a reference time for the calculation of the delay profiles is determined from the information item, and wherein the range comprises at least one forward portion and at least one backward portion from the reference time of a base station sending the information item, and wherein the forward portion and backward portion are sufficiently forward and backward from the reference time to allow a calculation of at least two delay profiles of at least two other base stations not sending the information item.

9. The wireless position measurement terminal of claim 1, further comprising a position calculator (23) wherein, upon completion of the calculation of the delay profiles of at least three base stations (2, 3, 4) by said delay profile calculating circuit (21) from at least three remote received signals, the terminal calculates propagation times between the terminal and the at least three base stations based on the at least three delay profiles, wherein said position calculator calculates an actual position of the terminal based on the at least three propagation times and the information item.

10. The wireless position measurement terminal of claim 1, wherein the range in a first area wherein base stations are densely populated is smaller than the range in a second area wherein base stations are less densely populated than in the first area.

11. A wireless position measurement system that performs delay profile calculation window sizing for a terminal, wherein the window sizing is correspondent to a population density of base stations in a then-present location of the terminal, comprising:
the terminal (1);
at least three base stations (2, 3, 4), wherein at least one of said at least three base stations provides at least one signal to the terminal, wherein at least one of the at least one signals includes at least one information item;
wherein the terminal receives the at least one signal transmitted from at least one of said at least three base stations, and wherein the terminal estimates propagation distances between the terminal and each of said at least three base stations by calculating a delay profile of each base station, and wherein the delay profiles of all of said at least three base stations are calculated in a window sized by the terminal according to the at least one information item; and
wherein the terminal triangulates the then-present location of the terminal based on the at least three propagation distances.

12. The wireless position measurement system of claim 11, further comprising a center (12), wherein the at least one information item is stored in said center, and wherein the terminal receives the at least one information item over a wireless connection with said center via at least one of the at least one signals.

13. The wireless position measurement system of claim 11, wherein the terminal comprises:
a memory circuit (13) that stores positional information of a first plurality of base stations (2, 3, 4), wherein the first plurality of base stations includes at least one of said at least three base stations;
wherein at least one of the at least one of said at least three base stations in the first plurality of base stations sends the information item to the terminal in one of the at least one signals, and the terminal changes the window size according to a correlation of the positional information and the information item.

14. The wireless position measurement system of claim 13, wherein the at least one information item comprises the base station having maximum power received at the terminal, wherein the terminal changes the window size according to the positional information of the base station having maximum power received.

15. The wireless position measurement system of claim 11, wherein the at least one information item is received from one primary base station of said at least three base stations, and wherein the at least one information item comprises the window size needed for calculation of the delay profiles of said at least two base stations other than the one primary base station.

16. The wireless position measurement system of claim 11, wherein a reference time for the calculation of the delay profiles is determined from the information item, and wherein the window size comprises at least one forward portion and at least one backward portion from the reference time of the one of said at least three base station that is sending the information item, and wherein the forward portion and backward portion are sufficiently forward and backward from the reference time to allow a calculation of at least two delay profiles of said at least two base stations not sending the information item.

17. A method for performing delay profile calculation window sizing for a terminal (1) in a wireless position measurement system, wherein the window sizing is correspondent to a population density of base stations in a then-present location of the terminal, comprising:
receiving at least one signal at the terminal (1) from at least one of at least three base stations (2, 3, 4), wherein at least one of the at least one signals includes at least one information item;
sizing of a delay profile calculation window according to the at least one information item; estimating of propagation distances between the terminal and each of the at least three base stations by a calculating of a delay profile of each base station, wherein the delay profiles of all of the at least three base stations are calculated in the window sized by the terminal according to the at least one information item; and
triangulating of the then-present location of the terminal based on the at least three propagation distances.

18. The method of claim 17, further comprising:
storing the at least one information item in a center (12); and
receiving the at least one information item over a wireless connection with the center via at least one of the at least one signals.

19. The method of claim 17, further comprising:
storing positional information of a first plurality of base stations (2, 3, 4), wherein the first plurality of base stations includes at least one of the at least three base stations;
sending by at least one of the at least one of said at least three base stations in the first plurality of base stations of the information item to the terminal in one of the at least one signals;
correlating the positional information and the information item; and
changing the window size according to said correlating of the positional information and the information item.

20. The method of claim 17, further comprising receiving the at least one information item from one primary base station of the at least three base stations, wherein the at least one information item comprises the window size needed for said calculating of the delay profiles of the at least two base stations other than the one primary base station.

21. The method of claim 17, further comprising:
determining a reference time for the calculation of the delay profiles from the information item;
determining a window size comprising at least one forward portion and at least one backward portion from the reference time of the one of the at least three base station that is sending the information item, wherein the forward portion and the backward portion are determined sufficiently forward and backward from the reference time to allow a calculation of at least two delay profiles of the at least two base stations not sending the information item.
